# NEUE EUROPÄISCHE PATENTSCHRIFT

(11) **EP 2 042 225 B2**
(45) Veröffentlichungstag und Bekanntmachung des Hinweises auf die Entscheidung über den Einspruch: **12.07.2017**
(45) Hinweis auf die Patenterteilung: 17.02.2010
(21) Anmeldenummer: 07019107.7
(22) Anmeldetag: 28.09.2007
(51) Int. Cl.: B01D 53/94, B01J 23/00, B01J 23/63, B01J 35/00, B01J 35/04, B01J 37/02, B01J 38/16

(54) **Entfernung von Partikeln aus dem Abgas von mit überwiegend stöchiometrischem Luft/Kraftstoff-Gemisch betriebenen Verbrennungsmotoren**
Removal of particles from exhaust gas from combustion engines run on a primarily stoichiometric air/fuel mixture
Retrait de particules du gaz d'échappement de moteurs à combustion interne fonctionnant essentiellement au mélange air/carburant stoechiométrique

(43) Veröffentlichungstag der Anmeldung: 01.04.2009
(73) Patentinhaber: Umicore AG & Co. KG, 63457 Hanau-Wolfgang (DE)
(72) Erfinder: Klingmann, Raoul, Broken Arrow, OK, 74014 (US); Roesch, Martin, 63110 Rodgau (DE); Lindner, Dieter, 63457 Hanau (DE)

(56) Entgegenhaltungen:
- EP-A- 0 885 650
- EP-A- 1 669 135
- EP-A- 1 726 359
- EP-A- 1 974 809
- EP-A1- 1 136 115
- EP-A2- 2 042 226
- WO-A-02/26379
- DE-A1- 10 024 994

## Beschreibung

Die Erfindung betrifft ein Verfahren zur Entfernung von Partikeln, Kohlenmonoxid, Kohlenwasserstoffen und Stickoxiden aus dem Abgas von mit überwiegend stöchiometrischem Luft/KraftstoffGemisch betriebenen Verbrennungsmotoren.

Abgase von mit überwiegend mit stöchiometrischem Luft/Kraftstoff-Gemisch betriebenen Verbrennungsmotoren werden in herkömmlichen Verfahren mit Hilfe von Dreiwege-Katalysatoren gereinigt. Diese sind in der Lage, die drei wesentlichen gasförmigen Schadstoffe des Motors, nämlich Kohlenwasserstoffe, Kohlenmonoxid und Stickoxide, gleichzeitig zu unschädlichen Komponenten umzusetzen.

Dreiwegekatalysatoren werden in EP 1 974 809 beschrieben. Hierin wird ein doppelschichtiger Dreiwege-Katalysator auf einem inerten Katalysatorträger aus Keramik oder Metall offenbart, der dadurch gekennzeichnet ist, daß beide Schichten jeweils ein aktives Aluminiumoxid und ein Cer/Zirkon-Mischoxid enthalten, die mit Palladium katalytisch aktivert sind, wobei beide Oxidmaterialien der zweiten Schicht zusätzlich mit Rhodium katalytisch aktiviert sind, und das Cer/Zirkon-Mischoxid einen höheren Zirkonoxidgehalt aufweist als das Cer/Zirkon-Mischoxid der ersten Schicht. Weiterhin wird ein Dreiwegekatalysator offenbart, der auf einem Wabenkörper zwei Schichten identischer Zusammensetzung enthält. Beide Schicht enthalten mit Lanthan stabilisiertes Aluminiumoxid, zwei verschiedene Cer/Zirkon-Mischoxide, Strontiumoxid und Rhodium und Palladium.

Außer den gasförmigen Schadstoffen Kohlenwasserstoffe (HC), Kohlenmonoxid (CO) und Stickoxide (NOₓ) enthält das Abgas von Benzinmotoren auch feinste Partikel (PM), die aus der unvollständigen Verbrennung des Kraftstoffs resultieren und im wesentlichen aus Ruß bestehen.

Im Unterschied zur Partikelemission von Dieselmotoren sind die Partikel im Abgas überwiegend stöchiometrisch betriebener Benzinmotoren sehr klein, d.h. sie weisen eine durchschnittliche Partikelgröße kleiner 1 µm auf. Typische Partikelgrößen liegen im Bereich 10 bis 100 nm. Aufgrund des von lungengängigen Kleinstpartikeln ("Feinstaub") ausgehenden Gesundheitsgefährdungspotentials wird es bereits mit der Einführung der EU-5-Abgasnorm in Europa ab 2010 eine Limitierung der zugelassenen Partikelemission auch für Benzinmotoren geben. Infolge der Umstellung der Partikelmeßverfahren von die Partikelmasse erfassenden Verfahren auf Partikelzählverfahren ist für die darauffolgende europäische Abgasnorm EU-6 mit einer Umstellung des Grenzwertes vom Partikelmassengrenzwert auf einen kritischeren Partikelzahlgrenzwert zu rechnen. Demzufolge werden künftige Abgasreinigungskonzepte für stöchiometrisch betriebene Verbrennungsmotoren auch effektiv arbeitende Einrichtungen zur Entfernung von Partikeln enthalten müssen.

Verfahren und Vorrichtungen zur Entfernung von Partikel aus dem Abgas von Dieselmotoren sind gut bekannt. Dies schließt katalytisch aktive Dieselpartikelfilter ein, wobei katalytische Beschichtungen auf Partikelfiltern für Dieselabgasreinigungsverfahren meist oxidationskatalytische Beschichtungen sind, die vor allem dazu dienen, die Verbrennung der auf dem Filter abzuscheidenden Rußpartikel zu erleichtern und so die Rußzündtemperatur abzusenken. Durch die Absenkung der Rußzündtemperatur wird die für den Filter charakteristische "Balance Point Temperature" (BPT) abgesenkt. Mit "Balance Point Temperature" (BPT) wird die Temperatur bezeichnet, bei der die Menge der im Filter akkumulierten Partikel pro Zeiteinheit der Menge der abgebrannten Partikel pro Zeiteinheit entspricht. Die BPT ist eine für das katalytisch aktivierte Filter charakteristische Größe, die vom gewählten Betriebspunkt des Motors bzw. von der Abgastemperatur, dem Abgasmassehstrom und der Zusammensetzung des Abgases am Eintritt des Filters abhängt.

Die WO 00/29726 beschreibt eine Vorrichtung zur Reinigung von Dieselabgasen, in der ein katalytisch aktives Filter enthalten ist. Das Filter umfaßt einen ersten Katalysator, der ein erstes Platingruppenmetall und eine erste Cerverbindung enthält. Die Vorrichtung enthält außerdem einen zweiten Katalysator, der eine zweite Cerverbindung enthält. Es sind Ausführungsformen beschrieben, in denen beide Katalysatoren auf dem Filtersubstrat angeordnet sind. Das System zeichnet sich dadurch aus, daß mit Hilfe der im zweiten Katalysator enthaltenen Cerverbindung der den Rußpartikeln anhaftende Anteil an flüchtigen organischen Bestandteilen ("volatile organic fraction" VOF) in der Dieselpartikelmasse durch Oxidation entfernt werden kann. Daher wird in den besonders bevorzugten Ausführungsformen der zweite Katalysator vor dem katalytisch aktiven Dieselpartikelfilter angeordnet.

WO 02/26379 der Anmelderin beschreibt ein Verfahren zur Verminderung von Kohlenmonoxid, Kohlenwasserstoffen und Rußpartikeln im Abgas von Magermotoren unter Verwendung eines Partikelfilters, wobei die Rußpartikel eine Rußzündtemperatur T_{z} aufweisen und das Partikelfilter von Zeit zu Zeit durch Anheben der Temperatur des Partikelfilters über die Rußzündtemperatur und Verbrennen der Rußpartikel regeneriert wird. Das verwendete Partikelfilter ist mit einer katalytisch aktiven Beschichtung versehen, die zur Verminderung der Zündtemperatur des Rußes wenigstens eine Sauerstoff-speichernde Komponente und wenigstens eines der Platingruppenmetalle Platin, Palladium und Rhodium enthält. In einer bevorzugten Ausführungsform des Partikelfilters enthält die Beschichtung eine zweite Gruppe von Verbindungen, die zur Oxidation von Kohlenmonoxid und Kohlenwasserstoffen dient und mindestens eines der Platingruppenmetalle Platin, Palladium und Rhodium geträgert auf einem Trägermaterial ausgewählt aus der Gruppe bestehend aus Aluminiumoxid, Siliziumdioxid, Titandioxid, Zirkonoxid, Zeolith oder Mischungen davon enthält. Die beiden Stoffgruppen werden bevorzugt in zwei getrennten, übereinander liegenden Schichten angeordnet, wobei die oxidationskatalytisch aktive Beschichtung direkt auf den Anströmkanälen des Filtersubstrats aufgebracht ist und die die Rußzündtemperatur vermindernde Beschichtung darüber angeordnet ist, so daß das zu reinigende Abgas zuerst in Kontakt mit der die Rußzündtemperatur absenkenden Beschichtung kommt.

Der Absenkung der Rußzündtemperatur kommt beim Einsatz von Partikelfiltern zur Reinigung von Dieselabgasen besondere Bedeutung zu, da infolge des "kalten" Verbrennungsprofils im Dieselmotor die Erzeugung von Temperaturen oberhalb von 400°C in der nachgeordneten Abgasanlage häufig schwierig ist. Dementsprechend gibt es eine Vielzahl weiterer Patentanmeldungen, die Partikelfilter mit oxidationskatalytisch aktiver Beschichtung und/oder Rußzündtemperatur-absenkender Beschichtung zum Gegenstand haben. In einigen Anmeldungen, wie beispielsweise der US 2006/0057046 A1 wird darüber hinaus der Abgasgegendruckproblematik von Filtersubstraten Rechnung getragen. Hierbei wird durch besondere räumliche Anordnungen der katalytischen_Beschichtung ein möglichst gleichmäßiger Durchfluß des Abgases durch die Filterwände über die gesamte Länge des Bauteils erzeugt.

Bei der Entfernung von Partikeln aus dem Abgas überwiegend stöchiometrisch betriebener Benzinmotoren gibt es wesentliche Unterschiede hinsichtlich der Abgastemperatur, der Abgaszusammensetzung und der Beschaffenheit der Partikel. Diese müssen in einem geeigneten Abgasreinigungskonzept abgebildet werden.

Wie bereits beschrieben, weisen Partikel in den Emissionen eines Benzinmotors eine deutlich kleinere durchschnittliche Partikelgröße auf. Dies führt dazu, daß nicht alle im Stand der Technik bekannten Filterkörper zur möglichst vollständigen Reinigung des Abgases von Partikelemissionen geeignet sind, sondern Substrate verwendet werden müssen, die auch für Feinstpartikel nicht durchgängig sind. Dementsprechend beschreibt die US 2006/0133969 A1 ein Abgassystem für Verbrennungsmotoren, das ein katalysiertes keramisches Wandflußfilter enthält, welches mit einer Washcoat-Komposition versehen ist, die einen Oxidationskatalysator und ein Stickoxid-Adsorber umfaßt, wobei das unbeschichtete keramische Wandflußfilter eine Porosität > 40 % und eine durchschnittliche Porengröße von 8-25 µm hat und die Washcoat-Komposition einen D50 kleiner/gleich 8 µm aufweist. Die Washcoat-Komposition umfaßt Platin und/oder Palladium als oxidationskatalytisch aktive Komponente und ein Metalloxid eines Metalls ausgewählt aus der Gruppe der Alkalimetalle, der Erdalkalimetalle und der Selten-Erd-Metalle oder Mischungen davon als Stickoxid-Adsorber. In einer Ausführungsform ist auf den Ausgangskanälen des Filters Rhodium aufgebracht. Das in der US 2006/0133969 beschriebene katalytisch aktivierte Filter ist eine "NOₓ-PartikelFalle" ("NOₓ particulate trap" NPT), die sich insbesondere zur Entfernung von Partikeln und Stickoxiden aus dem Abgas überwiegend mager betriebener Diesel- und Benzinmotoren eignet und zyklisch mit Wechseln aus fettem und mageren Abgas zu betreiben ist.

Benzinmotoren, die mit einem überwiegend stöchiometrischen Luft/Kraftstoff-Gemisch betrieben werden, weisen meist wesentlich höhere Abgastemperaturen auf als Magermotoren. Daher muß sich ein katalytisch beschichtetes Partikelfilter, das zur Reinigung von Abgasen überwiegend stöchiometrisch betriebener Verbrennungsmotoren eingesetzt wird, vor allem durch eine hohe thermische Alterungsstabilität auszeichnen. Insbesondere muß eine derartige Partikelfalle bei hinreichender katalytischer Aktivität Temperaturen bis 1100°C auch über einen längeren Zeitraum und starken Temperaturwechseln standhalten. Die aus dem Stand der Technik bekannten katalytisch aktivierten Dieselpartikelfilter genügen diesen Anforderungen in der Regel nicht.

EP 1 300 193 A1 der Anmelderin beschreibt ein Verfahren zur katalytischen Umsetzung von Schadstoffen im Abgas von Verbrennungsmotoren, wobei das Abgas durch eine gegebenenfalls beidseitig katalytisch beschichtete poröse Tragkörperwand mit offener Porenstruktur hindurchtritt. Dabei kann der Tragkörper selbst aus katalytisch aktivem Material bestehen. Eine besondere Ausführungsform des Verfahrens eignet sich zur Reinigung der Abgase von stöchiometrisch betriebenen Verbrennungsmotoren. Dabei wird ein Substrat mit einer Dreiwegekatalysatorbeschichtung verwendet, die simultan Stickoxide, Kohlenwasserstoffe und Kohlenmonoxid umsetzen kann.

Das Dokument DE-A-10024994 beschreibt einen katalytischen Umwandler zur Reinigung von Abgas, bestehend aus einer ersten Überzugsschicht gebildet auf einer hitzebeständigen Unterlage und einer zweiten Überzugsschicht gebildet auf der ersten Überzugsschicht, wobei die erste Überzugsschicht Aluminiumoxid enthält, welches Palladium trägt und wobei die zweite Überzugsschicht Ce-Zr-Komplexoxide beinhaltet, die nebeneinander bestehend Platin und Rhodium tragen, und Zr-Ce-Kömplexoxide, die sich in der Zusammensetzung von den Ce-Zr-Komplexoxiden unterscheiden und die nebeneinander bestehend Platin und Rhodium tragen.

Es ist Aufgabe der vorliegenden Erfindung, ein Verfahren zur Entfernung von Partikeln, Kohlenwasserstoffen (HC), Kohlenmonoxid (CO) und Stickoxiden (NOₓ) zur Verfügung zu stellen, womit die Abgase überwiegend stöchiometrisch betriebener Verbrennungsmotoren in der Weise gereinigt werden, daß künftige gesetzliche Abgasnormen eingehalten werden können.

Diese Aufgabe wird durch ein Verfahren gelöst, das dadurch gekennzeichnet ist, dass das Abgas über ein katalytisch aktives Partikelfilter geleitet wird, welches einen Filterkörper und eine katalytisch aktive Beschichtung enthält, wobei die katalytisch aktive Beschichtung aus zwei Schichten besteht, die beide ein aktives Aluminiumoxid enthalten. Die Schichten sind so angeordnet, daß die erste Schicht vom anströmenden Abgas direkt kontaktiert wird, während die zweite Schicht mit dem abströmenden Abgas in direktem Kontakt steht. Das katalytisch aktive Partikelfilter ist dadurch gekennzeichnet, daß das Aluminiumoxid in der ersten Schicht mit Palladium katalytisch aktiviert ist, während die zweite Schicht Rhodium als katalytisch aktive Komponente und zusätzlich ein Sauerstoff speicherndes Cer/Zirkon-Mischoxid enthält.

Anströmendes Abgas und abströmendes Abgas im Sinne dieser Schrift unterscheiden sich vor allem dadurch, daß das abströmende Abgas weniger Partikel enthält als das anströmende Abgas bzw. weitgehend frei von Partikeln ist.

Ein wesentlicher Unterschied zwischen dem Abgas von Magermotoren und überwiegend stöchiometrisch betriebenen Benzinmotoren liegt im Sauerstoffgehalt des Abgases. Während im Abgas von Magermotoren bis zu 15 Vol.% Sauerstoff enthalten sein können, zeichnet sich das Abgas von überwiegend stöchiometrisch betriebenen Benzinmotoren in der Regel durch geringe Sauerstoffgehalte aus. Infolgedessen ist die Verwendung einer die Rußzündtemperatur absenkenden Beschichtung auf einem Filtersubstrat weitgehend wirkungslos, da das Abgas nicht ausreichend Oxidationsmittel für einen Rußabbrand bei abgesenkter Temperatur enthält. Da andererseits im Abgas von überwiegend stöchiometrisch betriebenen Verbrennungsmotoren nur geringe Rußmengen vorhanden sind, ist das verwendete Filter so zu gestalten, daß mit den regulär vorhandenen Sauerstoffmengen von etwa 0,7 Vol.-% bei Temperaturen oberhalb der Rußzündtemperatur möglichst viel Ruß permanent abgebrannt werden kann. Um den permanenten Rußabbrand nicht durch Sauerstoffspeicher-Effekte, die bei der Umsetzung von HC und CO in leicht fetten Betriebsphasen durchaus gewünscht sind, zu behindern, ist es daher eine bevorzugte Ausgestaltung der Erfindung, wenn die erste, direkt vom anströmenden Abgas kontaktierte Schicht kein Sauerstoff speichernde Cer/Zirkon-Mischoxid enthält.

Als Trägeroxid für das katalytisch aktive Edelmetall wird in der ersten, mit dem anströmenden Abgas in Kontakt stehenden Schicht ein aktives Aluminiumoxid verwendet. In der zweiten, mit dem abströmenden Abgas in Kontakt stehenden Schicht kann das katalytisch aktive Edelmetall auch auf dem Sauerstoff speicherndem Cer/Zirkon-Mischoxid aufgebracht sein.

Bevorzugt werden aktive Aluminiumoxide eingesetzt, die mit 1 bis 10 Gew.-% Lanthanoxid, bezogen auf das Gesamtgewicht des Aluminiumoxids, stabilisiert sind. Diese meist dotierten Aluminiumoxide weisen eine deutlich höhere Oberflächenstabilität bei hohen Temperaturen auf als reines Aluminiumoxid.

Auf das aktive Aluminiumoxid der ersten Schicht wird Palladium aufgebracht. Nach dem in der US 6,103,660 beschriebenen Verfahren wird Palladium bevorzugt ausgehend von Palladiumnitrat unter Verwendung von Bariumhydroxid oder Strontiumhydroxid als Base abgeschieden. Mit der so erhaltenen Suspension kann der Filterkörper sofort beschichtet werden. Die aufgebrachte Schicht wird anschließend getrocknet und gegebenenfalls kalziniert. Dabei wird die Menge des Palladiums in der Suspension bzw. die Menge der Beschichtungssuspension so gewählt, daß die Konzentration des Palladiums in der ersten Schicht nach Trocknung und Kalzination zwischen 0,1 und 10 g/L, bevorzugt zwischen 0,5 und 8 g/L, bezogen auf das Volumen des Partikelfilters, liegt.

Die Verwendung von Bariumhydroxid oder Strontiumhydroxid als Base für die Fällung von Palladiumnitrat führt nach Kalzination zum Verbleib von Bariumoxid oder Strontiumoxid, welches auf der Oberfläche des aktiven Aluminiumoxid in der ersten Schicht abgeschieden ist.

Alternativ zur beschriebenen Vorgehensweise können die Edelmetalle auch auf jeder Feststoffkomponente des Katalysators separat abgeschieden werden. Erst danach werden dann zum Beispiel mit Palladium oder Rhodium aktiviertes Aluminiumoxid oder mit Rhodium aktiviertes Cer/Zirkon-Mischoxid in den für die herzustellende Schicht benötigten Verhältnissen in Wasser suspendiert und auf den Filterkörper aufgebracht. Eine solche Vorgehensweise ermöglicht es, die Konzentration der katalytisch aktiven Edelmetalle auf Aluminiumoxid einerseits und Cer/Zirkon-Mischoxid andererseits gezielt einzustellen, was insbesondere für die Alterungsstabilität der zweiten, vom abströmenden Abgas direkt kontaktierten Schicht vorteilhaft sein kann. Bevorzugt wird für die separate Abscheidung der Edelmetalle auf Aluminiumoxid und/oder Cer/Zirkon-Mischoxid das in der EP 0 957 064 beschriebene Verfahren angewendet.

Unabhängig von der Art der Einbringung des Edelmetalls in der zweiten Schicht sind die Rhodiummenge in der Beschichtungssuspension und die Menge der Beschichtungssuspension selbst so zu wählen, daß die Konzentration des Rhodiums in der zweiten Schicht des fertigen Partikelfilters zwischen 0,01 und 1 g/L, bevorzugt zwischen 0,03 und 0,5 g/L liegt, bezogen auf das Volumen des Partikelfilters.

Die tatsächlich zu verwendenden Edelmetallkonzentrationen werden in erster Linie von den gewünschten Umsatzraten für die gasförmigen Schadstoffe Kohlenmonoxid (CO), Kohlenwasserstoffe (HC) und Stickoxide (NOₓ) bestimmt. Sie haben jedoch auch Einfluß auf die BPT des resultierenden katalytisch aktivierten Partikelfilters. Bei besonderen Anforderungen an Aktivität und Alterungsstabilität können spezielle Ausfühningsformen des katalytisch aktiven Filters in einer oder in beiden Schichten zusätzlich zu Palladium bzw. Rhodium Platin enthalten. Bevorzugt wird dann das aktive Aluminiumoxid der ersten Schicht und/oder das aktive Aluminiumoxid der zweiten Schicht und/oder das Sauerstoff speichernde Cer/Zirkon-Mischoxid der zweiten Schicht zusätzlich mit Platin katalytisch aktiviert. Dabei wird die Konzentration des Platins so gewählt, daß sie in der ersten Schicht und/oder in der zweiten Schicht je 0,01 bis 10 g/L beträgt, jeweils bezogen auf das Volumen des Partikelfilters.

Zur weiteren Verbesserung der Lebensdauer des katalytisch aktiven Filters, insbesondere im Hinblick auf Temperaturstabilität und Temperaturwechselbeständigkeit, kann der Zusatz oxidischer Hilfsstoffe in den Beschichtungen vorteilhaft sein. So enthalten bevorzugte Ausgestaltungen des erfindungsgemäßen Verfahrens Partikelfilter die in der ersten Schicht zusätzlich Lanthanoxid oder Neodymoxid und/oder in der zweiten Schicht zusätzlich Zirkonoxid enthalten. Das Zirkonoxid ist bevorzugt mit 1 bis 30 Gew.% Seltenerdmetalloxid, bezogen auf das Gesamtgewicht des Zirkonoxids stabilisiert, wobei in besonders gut geeigneten Ausführungsformen nicht mehr als 15 Gew.% Ceroxid, bezogen auf das Gesamtgewicht des stabilisierten Zirkonoxids enthalten sind.

Das erfindungsgemäße Verfahren kann neben Partikel auch die gasförmigen Schadstoffe Kohlenwasserstoff (HC), Kohlenmonoxid (CO) und Stickoxide (NOₓ) aus dem Abgas entfernen. Da das Abgas überwiegend stöchiometrisch betriebener Verbrennungsmotoren mit maximal 0,7 Vol.-% O₂ nur geringe Mengen Sauerstoff enthält, ist die Wahl eines geeigneten Sauerstoffspeichermaterials bedeutend. Um die Fähigkeit des Partikelfilters zum permanenten Rußpartikelabbrand nicht zu beeinträchtigen, kann die erste, mit dem anströmenden Abgas in direktem Kontakt stehende Schicht frei sein von einem Sauerstoff speichernden Cer/Zirkon-Mischoxid. Die zweite, mit dem abströmenden und von Partikeln gereinigten Abgas in Kontakt stehende Schicht enthält ein Sauerstoff speicherndes Cer/Zirkon-Mischoxid und gewährleistet somit die zur Umsetzung der gasförmigen Schadstoffe CO, HC und NOₓ notwendige Dreiwegekatalysator-Aktivität des katalytisch aktivierten Partikelfilters. Dabei wird in der zweiten Schicht bevorzugt ein Cer/Zirkon-Mischoxid eingesetzt, das mit 1 bis 15 Gew.% Metalloxiden, besonders bevorzugt 5 bis 10 Gew.%, bezogen auf das Gesamtgewicht des Mischoxids, stabilisiert ist. Dabei handelt es sich bevorzugt um Oxide der Metalle ausgewählt aus der Gruppe bestehend aus Eisen, Mangan, Titan, Silizium, Zinn, Yttrium, Lanthan, Praseodym, Neodym, Samarium oder Mischungen davon. Gut geeignet sind Cer/Zirkon-Mischoxide mit einem Gewichtsverhältnis Ceroxid zu Zirkonoxid von 1 bis 0,1, insbesondere von 0,8 bis 0,2. Die spezifische Oberfläche dieser Materialien liegt vorteilhafterweise im Bereich zwischen 50 und 100 m²/g.

Die im Abgas von überwiegend mit stöchiometrischem Luft/Kraftstoff-Gemisch betriebenen Verbrennungsmotoren enthaltenen Partikel weisen in der Regel kleinere mittlere Partikelgrößen auf als die im Abgas von Dieselmotoren enthaltenen Partikel. Dies muß bei der Auswahl des Filterkörpers berücksichtigt werden. Geeignet sind Filterkörper ausgewählt aus der Gruppe der keramischen Wandflußfiltersubstrate, der Sintermetallfilterkörper oder der keramischen oder metallischen Schaumstrukturen. Insbesondere bei Schaumstrukturen und Sintermetallfilterkörpern darf zur Erzielung einer adäquaten Filterwirkung die Porengröße nicht zu groß gewählt werden. Bevorzugt ist der Filterkörper ausgewählt aus der Gruppe der keramischen Wandflußfiltersubstrate. Insbesondere eignen sich keramische Wandflußfiltersubstrate, deren Wände eine offenporige Struktur mit einer Porosität von 40 bis 80 %, bevorzugt 45 bis 65 %, und einen mittleren Porendurchmesser von 9 bis 30 Micrometern aufweisen. Besonders bevorzugt sind Wandflußfiltersubstrate mit einem mittleren Porendurchmesser von 9 bis 22 µm, und bei besonders feinen Partikeln 9 bis 18 µm.

Auf den Filterkörper des katalytisch aktiven Partikelfilters sind zwei katalytisch aktive Schichten aufgebracht. Die Anordnung der Schichten ist nicht beliebig, sondern muß so gewählt werden, daß die hohen Anforderungen an die Alterungsbeständigkeit bei möglichst geringer Erzeugung von Abgasgegendruck durch das Bauteil erfüllt werden können. Folgende Punkte sind bei der Wahl der Beschichtungsanordnung besonders zu bedenken:
- Das katalytisch beschichtete Filter soll auch nach einer längeren thermischen Belastung bei Temperaturen von bis zu 1100°C gute CO-, HC- und NOₓ-Umsätze bei einem Sauerstoffgehalt von maximal 0,7 Vol% im Abgas zeigen. Die erforderliche hohe Dreiwege-Aktivität des katalytisch aktiven Partikelfilters nach thermischer Alterung läßt sich bei räumlicher Trennung der katalytisch aktiven Komponenten Palladium und Rhodium erreichen. Räumliche Nähe der beiden Edelmetalle kann bei höheren Temperaturen zur Ausbildung von weniger katalytisch aktiven Legierungen führen.
- Um den Abgasgegendruck, der durch das Bauteil erzeugt wird und zu Einbußen in der für den Antrieb nutzbaren Motorleistung führt, zu minimieren, müssen die Schichten so angeordnet sein, daß sie dem Abgas so wenig Strömungswiderstand wie möglich entgegensetzen. Trotzdem müssen die Kontaktzeiten des Abgases mit den katalytisch aktiven Komponenten lang genug sein, um auch bei hohen Raumgeschwindigkeiten hinreichende Raum-Zeit-Ausbeuten zu gewährleisten.
- Die geringen Sauerstoffgehalte im Abgas müssen so effektiv wie möglich genutzt werden. Dies ist bei der Anordnung der Sauerstoffspeichermaterialien zu berücksichtigen.

Das katalytisch aktive Partikelfilter enthält in einer ersten Schicht Palladium als katalytisch aktive Komponente. Diese Schicht ist so anzuordnen, daß sie mit dem anströmenden, d.h. partikelreichen Abgas in direktem Kontakt steht. Die zweite katalytisch aktive Schicht enthält Rhodium als katalytisch aktive Komponente und ein Sauerstoff speicherndes Cer/Zirkon-Mischoxid. Diese Schicht ist so anzuordnen, daß sie mit dem abströmenden d.h. partikelarmen bzw. partikelfreien Abgas in direktem Kontakt steht.

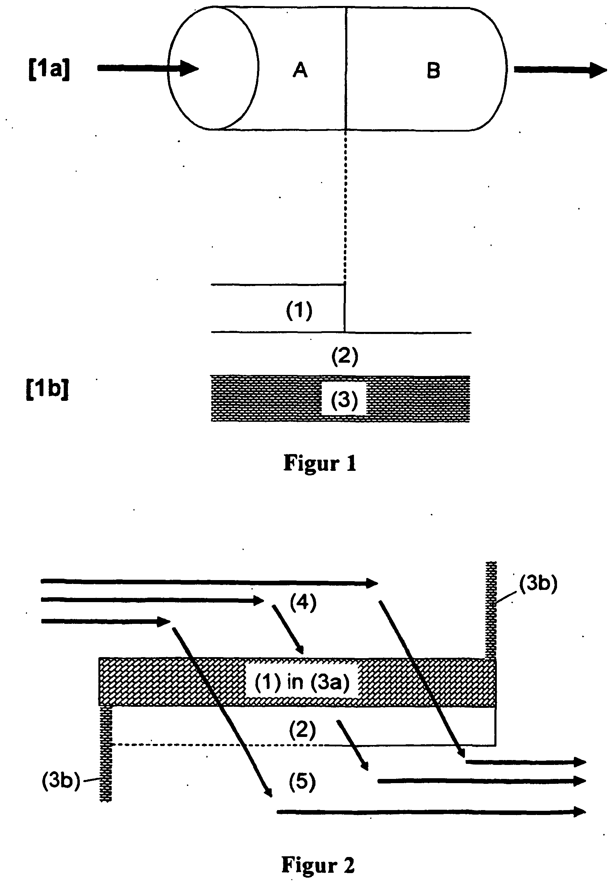

In einer Ausgestaltung des Partikelfilters wird der Filterkörper als Tragkörper für die zweite, Rhodium-haltige Schicht verwendet, wobei die Rhodium-haltige Schicht die gesamte Länge des Bauteils einnimmt. Dieser mit der zweiten, Rhodium-haltigen Schicht beschichtete Filterkörper dient dann als Tragkörper für die erste, Palladium-haltige Schicht. Sie nimmt 40 bis 100 % der Länge des Bauteils ein und ist auf der Anströmseite des Bauteils angeordnet. Eine Teilbeschichtung sollte insbesondere dann erfolgen, wenn es sich bei dem Filterkörper um ein Durchflußsubstrat, also beispielsweise um eine keramische oder metallische Schaumstruktur, handelt. Figur 1 zeigt schematisch eine entsprechende Schichtanordnung in einem Durchflußfilterbauteil. Figurenteil [1a] zeigt die Aufsicht auf das Gesamtbauteil. Die Strömungsrichtung des Abgases wird durch die Pfeile angezeigt. Zone A kennzeichnet die Anströmseite, Zone B die Abströmseite des Filters. Figurenteil [1b] zeigt eine schematische Ansicht der beschichteten Wand eines Strömungskanals, wobei (1) die Palladium-haltige, erste Schicht, (2) die Rhodium-haltige, zweite Schicht und (3) die gegebenenfalls gasdichte Wand des Filterkörpers bezeichnet.

Wird ein keramisches Wandflußfiltersubstrat als Filterkörper verwendet, so wird die Palladium-haltige Beschichtung in den Anströmkanälen, die Rhodium-haltige Beschichtung in den Abströmkanälen eingebracht. In den bevorzugten Ausgestaltungen der Erfindung wird die Beschichtung ganz oder wenigstens teilweise in den porösen Wänden des Wandflußfiltersubstrates angeordnet. Eine solche Maßnahme trägt dazu bei, den vom resultierenden erfindungsgemäßen Bauteil erzeugten Abgasgegendruck zu minimieren.

Figur 2 zeigt schematisch eine bevorzugte Ausgestaltung des Partikelfilters, worin die erste, vom anströmenden Abgas kontaktierte, Palladium-haltige Schicht (1) über die gesamte Länge des Bauteils in die Poren der Wände des keramischen Wandflußfiltersubstrates (3a) eingebracht und homogen in der Wand verteilt ist. Die zweite, mit dem abströmenden Abgas in direktem Kontakt stehende Schicht ist in den Abströmkanälen (5) auf die Wand aufgebracht. Sie nimmt 40 bis 100 % der Länge des Bauteils ein und ist auf der Abströmseite angeordnet. Im Wandflußfiltersubstrat ist der Anströmkanal (4) auf der Abströmseite, der Abströmkanal (5) auf der Anströmseite gasdicht verschlossen (3b), so daß das Abgas zum Durchtritt durch die poröse Wand gezwungen wird. Die Pfeile zeigen den Strömungsweg des Abgases.

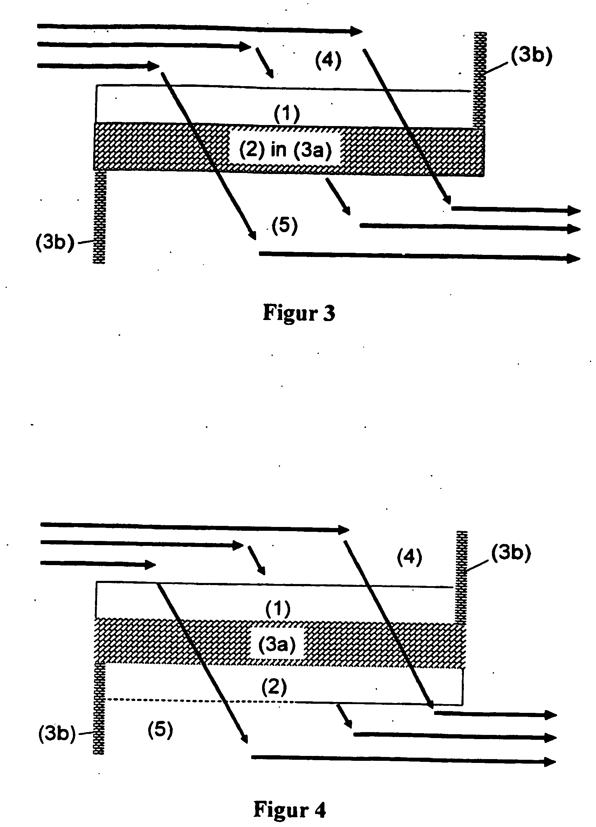

Figur 3 zeigt eine andere bevorzugte Ausgestaltung des Partikelfilters, worin die zweite, mit dem abströmenden Abgas in direktem Kontakt stehende, Rhodium-haltige Schicht (2) über die gesamte Länge des Bauteils in die Poren der Wände eines keramischen Wandflußsfiltersubstrats eingebracht und homogen in der Wand verteilt ist. Die erste, vom anströmenden Abgas kontaktierte, Palladium-halige Schicht (1) ist über die gesamte Länge des Bauteils in den Anströmkanälen (4) auf die Wand aufgebracht.

In Applikationen, in denen eine hohe Dreiwege-Aktivität nach thermischer Alterung Vorrang vor einem minimierten Abgasgegendruck des Bauteils hat, sind außerdem Ausgestaltungen des Partikelfilters gut geeignet, in denen die erste, vom anströmenden Abgas kontaktierte, Palladium-haltige Schicht (1) über die gesamte Länge des Bauteils in den Anströmkanälen (4) auf die Wand (3a) aufgebracht ist und die zweite, mit dem abströmenden Abgas in direktem Kontakt stehende Schicht (2) in den Abströmkanälen (5) auf die Wand aufgebracht (3a) aufgebracht ist. Dabei kann die zweite Schicht (2) 40 bis 100 % der Länge des Bauteils einnehmen, wobei sie auf der Abströmseite angeordnet sein muß. Eine solche Ausführungsform ist schematisch in Figur 4 dargestellt.

Das erfindungsgemäße Verfahren kann in den beschriebenen Ausgestaltungen insbesondere zur Entfernung von Partikeln, Kohlenmonoxid (CO), Kohlenwasserstoffen (HC) und Stickoxiden (NOₓ) aus dem Abgas von mit überwiegend stöchiometrischem Luft/Kraftstoff-Gemisch betriebenen Verbrennungsmotoren verwendet werden. Dazu muß es in die entsprechende Abgasreinigungsanlage eines Fahrzeugs eingebaut werden. Um einen möglichst effektiven permanenten Rußabbrand zu gewährleisten, wird das katalytisch aktive Partikelfilter bevorzugt in motomaher Position angeordnet.

Je nach Ausgestaltung der Abgasanlage und zu reinigender Rohemission des Fahrzeugs kann es vorteilhaft sein, zusätzlich zum Partikelfilter einen Dreiwegekatalysator enthaltend ein keramisches oder metallisches Durchflußsubstrat und eine katalytisch aktive Beschichtung zu verwenden. Der zusätzliche Dreiwegekatalysator kann anströmseitig oder abströmseitig zum Partikelfilter angeordnet sein.

Ist der Dreiwegekatalysator anströmseitig zum Partikelfilter angeordnet, so ist es vorteilhaft, wenn er weniger als 100 g/L Sauerstoff speicherndes Cer/Zirkon-Mischoxid enthält, bezogen auf das Volumen des Dreiwegekatalysators. Ein zu hoher Gehalt an Sauerstoff speicherndem Material anströmseitig zum Partikelfilter reduziert die ohnehin schon begrenzte Menge an Oxidationsmittel (Sauerstoff), die zum Partikelabbrand auf dem Filter benötigt wird, in unerwünschter Weise. Daher gehört es bei einer solchen Anordnung zu den besonders bevorzugten Ausgestaltungen der Abgasanlage, wenn ein anströmseitig zum Partikelfilter angeordneter Dreiwegekatalysator weniger als 75 g/L Sauerstoff speicherndes Cer/Zirkon-Mischoxid, bezogen auf das Volumen des Dreiwegekatalysators, mit einem Verhältnis von Ceroxid zu Zirkonoxid zwischen 0,35 und 0,1, besonders bevorzugt zwischen 0,25 und 0,15 enthält.

Ist der zusätzliche Dreiwegekatalysator abströmseitig zum Partikelfilter angeordnet, so kann der Gehalt an Sauerstoff speicherndem Cer/Zirkon-Mischoxid erhöht werden, um insbesondere in leicht fettem Abgas, das beispielsweise während der Beschleunigungsphasen des Fahrzeugs vorliegen kann, gute CO- und HC-Konvertierungsraten zu gewährleisten. In einer solchen Anordnung enthält der zusätzliche Dreiwegekatalysator bevorzugt mehr als 100 g/L Sauerstoff speicherndes Cer/Zirkon-Mischoxid, bezogen auf das Volumen des Dreiwegekatalysators. Besonders bevorzugt werden in einer solchen Anordnung Dreiwegekatalysatoren eingesetzt, die mehr als 100 g/L eines Sauerstoff speichernden Cer/Zirkon-Mischoxid mit einem Ceroxid/Zirkonoxid-Verhältnis zwischen 0,4 und 1 enthalten, bezogen auf das Volumen des Dreiwegekatalysators. Ganz besonders bevorzugt weist das Sauerstoff speichernde Cer/Zirkon-Mischoxid in einem abströmseitig zum Partikelfilter angeordneten Dreiwegekatalysator ein Ceroxid/Zirkonoxid-Verhältnis zwischen 0,5 und 0,9 auf.

So, wie das OSC-Material in einem Dreiwegekatalysator, der in der Abgasanlage zusätzlich zum Partikelfilter angeordnet ist, gute CO- und HC-Konversionsraten bei kurzzeitigen Belastungen mit fettem Abgas gewährleisten kann, kann es hilfreich sein, wenn der zusätzliche Dreiwegekatalysator weiterhin ein Stickoxid-Speichermaterial ausgewählt aus der Gruppe der Alkalimetalloxide, Erdalkalimetalloxide und Seltenermetalloxide oder Kombinationen davon enthält. Eine solche Ergänzung stellt sicher, daß bei kurzzeitigen Belastungen der Abgasanlage mit magerem Abgas keine unerwünschten Stickoxidemissionen auftreten.

Zur Reinigung des Abgases von mit überwiegend stöchiometrischem Luft/Kraftstoff Gemisch betriebenen Verbrennungsmotoren wird das Abgas zur Entfernung von Kohlenmonoxid (CO), Kohlenwasserstoffen (HC), Stickoxiden (NOₓ) und Partikeln über ein, katalytisch aktives Partikelfilter geleitet. Die gasförmigen Schadgase werden unter katalytischer Wirkung der auf den Filterkörper aufgebrachten Beschichtungen zu unschädlichen Abgaskomponenten (CO₂, N₂, H₂O) umgesetzt. Die im anströmenden Abgas enthaltenen Partikel werden im Partikelfilter gesammelt und bei hinreichender Abgastemperatur und entsprechendem Oxidationsmittelangebot direkt auf der Filterbeschichtung verbrannt. Ist die in das Partikelfilter eingetragene Partikelmasse größer als die Menge der permanent abgebrannten Partikel, so kommt es mit zunehmender Agglomeration der Partikel im Filter zu einem Ansteigen des Abgasgegendruckes. Überschreitet der Abgasgegendruck einen kritischen, in der Motorsteuerung vorgegebenen Wert, müssen zusätzliche Maßnahmen zur Partikelfilterregeneration eingeleitet werden.

Die Regeneration des Partikelfilters erfolgt durch das Überleiten eines sauerstoffreichen Abgases bei Abgastemperaturen zwischen 400 und 700°C. Bei einem mit überwiegend stöchiometrischem Luft/Kraftstoff Gemisch betriebenen Motor kann die Erzeugung des Sauerstoff-reichen Abgases beispielsweise im Wege einer Schubabschaltung erfolgen. Dabei wird die Kraftstoffzufuhr im Zylinder bei vollständig geöffneter Drosselklappe im Saugrohr kurzzeitig unterbrochen. Solche Schubabschaltungen treten bei modernen, Kraftstoff-sparenden Fahrzeugen beispielsweise immer dann auf, wenn im Fahrbetrieb eine Verzögerung durch Nutzung der sogenannten "Motorbremse" vorgenommen wird. Darüber hinaus kann die Erzeugung des zur Regeneration des Partikelfilters benötigten sauerstoffreichen Abgases durch Einblasung von Sekundärluft in den Abgasstrang erfolgen. Eine solche Verfahrensausgestaltung bietet sich bei allen Fahrzeugen an, die ohnehin eine Sekundärluftpumpe mitführen.

Die Erfindung wird anhand einiger Figuren und Beispiele näher erläutert.

Die **Figuren 1 bis 4** zeigen unterschiedliche Beschichtungsanordnungen in katalytisch aktiven Partikelfiltern. Darin bezeichnet
(1) die erste, Palladium-haltige Schicht;
(2) die zweite, Rhodium-haltige Schicht;
(3) die Wand des Filterkörpers;
   (3a) die poröse Wand eines Wandflußfiltersubstrats;
   (3b) den gasdichten Abschluß der Strömungskanäle in einem Wandflußfiltersubstrat;
(4) einen Anströmkanäl;
(5) einen Abströmkanal.

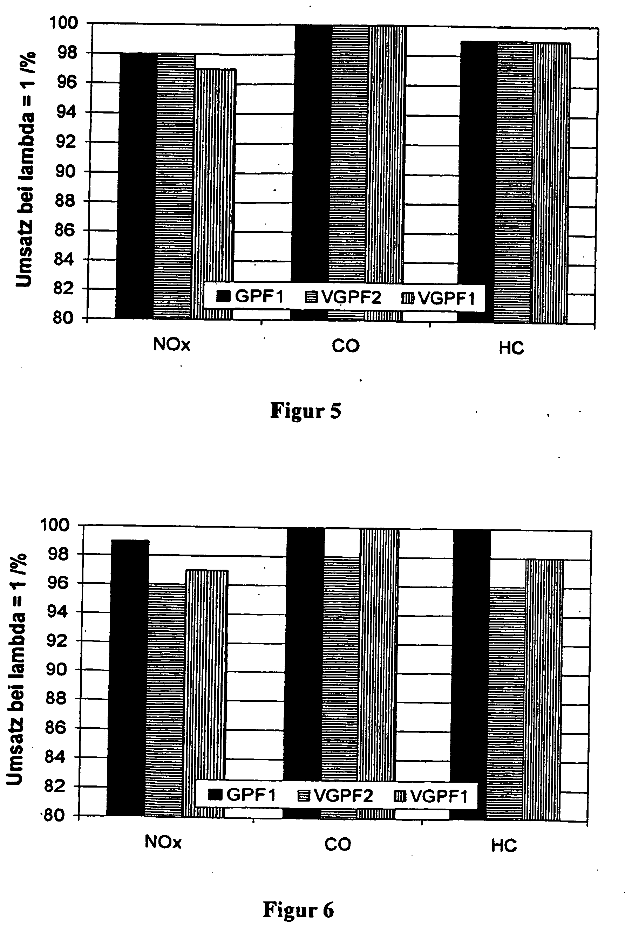

Die Figuren 5 bis 8 zeigen die Ergebnisse verschiedener Untersuchungen, die an einem Partikelfilter und Partikelfiltern nach dem Stand der Technik vorgenommen wurden. Es zeigen:
- **Figur 5:**: HC-, CO- und NOₓ-Umsatz bei λ = 1 des Partikelfilters GPF1 (■) im Vergleich zu Partikelfiltern nach dem Stand der Technik (VGPF 1 (||) aus Vergleichsbeispiel 1 - Partikelfilter mit einer in den Anströmkanälen aufgebrachten katalytisch aktiven Schicht; VGPF2 (=) aus Vergleichsbeispiel 2 - Partikelfilter mit einer in den Anströmkanälen aufgebrachten katalytisch aktiven Doppelschicht) in frisch hergestelltem und rußfreiem Zustand
- **Figur 6:**: HC-, CO- und NOₓ-Umsatz bei λ = 1 des Partikelfilter GPF1 (■) im Vergleich zu Partikelfiltern nach dem Stand der Technik (VGPF 1 (||) aus Vergleichsbeispiel 1 - Partikelfilter mit einer in den Anströmkanälen aufgebrachten katalytisch aktiven Schicht; VGPF2 (=) aus Vergleichsbeispiel 2 - Partikelfilter mit einer in den Anströmkanälen aufgebrachten katalytisch aktiven Doppelschicht) in frisch hergestelltem Zustand nach Aufbringen von ca. 5 g/L Ruß, bezogen auf das Volumen des katalytisch aktiven Partikelfilters

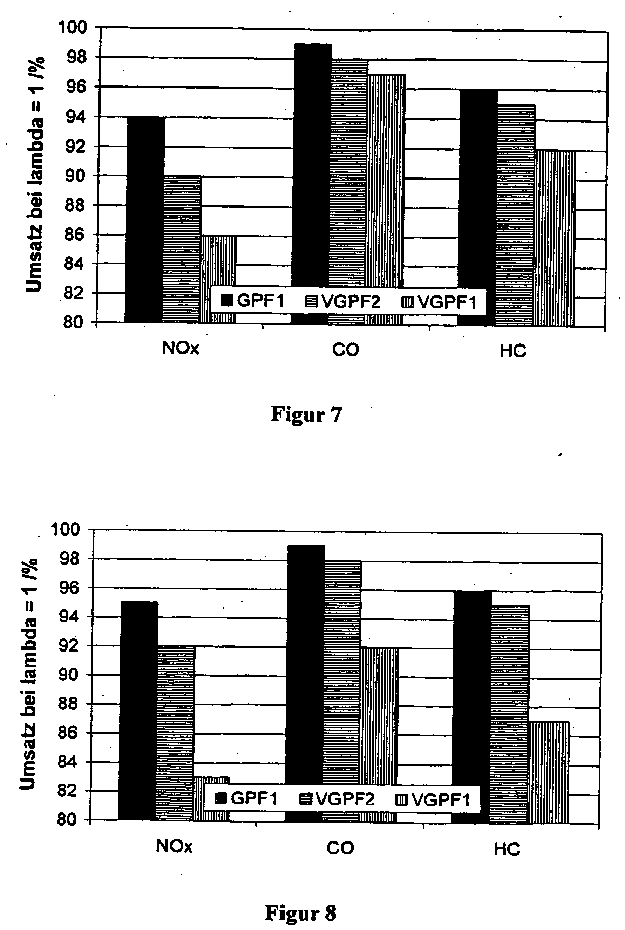

- **Figur 7:**: HC-, CO- und NOₓ-Umsatz bei λ = 1 des Partikelfilters GPF1 (■) im Vergleich zu Partikelfiltern nach dem Stand der Technik (VGPF 1 (||) aus Vergleichsbeispiel 1 - Partikelfilter mit einer in den Anströmkanälen aufgebrachten katalytisch aktiven Schicht; VGPF2 (=) aus Vergleichsbeispiel 2 - Partikelfilter mit einer in den Anströmkanälen aufgebrachten katalytisch aktiven Doppelschicht) nach Hydrothermalalterung in rußfreiem Zustand
- **Figur 8:**: HC-, CO- und NOₓ-Umsatz bei λ = 1 des Partikelfilters GPF1 (■) im Vergleich zu Partikelfiltern nach dem Stand der Technik (VGPF 1 (||) aus Vergleichsbeispiel 1 - Partikelfilter mit einer in den Anströmkanälen aufgebrachten katalytisch aktiven Schicht; VGPF2 (=) aus Vergleichsbeispiel 2 - Partikelfilter mit einer in den Anströmkanälen aufgebrachten katalytisch aktiven Doppelschicht) nach Hydrothermalalterung und Aufbringen von ca. 5 g/L Ruß, bezogen auf das Volumen des katalytisch aktiven Partikelfilters

### Herstellung und Prüfung der im Beispiel und in den Vergleichsbeispielen beschriebenen beschichteten Partikelfilter:

Zur Herstellung der im Beispiel und in den Vergleichsbeispielen beschriebenen katalytisch aktiven Partikelfilter wurden Wandflußfiltersubstrate aus Aluminiumtitanat (Typ: Corning Duratrap AT) mit ovalem Querschnitt (Stirnflächendurchmesser: 10,21 cm x 19,84 cm) und einer Länge von 17,4 cm beschichtet. Die Wandflußfiltersubstrate hatten eine Zelldichte von 46,5 Zellen pro Quadratzentimeter bei einer Zellwandstärke von 0,33 mm. Sie wiesen eine Porosität von 52 % und eine Dichte von 3,5 kg/L, bezogen auf das Volumen des Filterkörpers, auf.

Im Vergleichsbeispiel 1 wurde in den Anströmkanälen eine Beschichtungssuspension aufgebracht. In Vergleichsbeispiel 2 und im Beispiel wurden nacheinander zwei verschiedene Beschichtungssuspensionen aufgebracht, wobei die erste Beschichtungssuspension in den Anströmkanälen angeordnet wurde. Die zweite Beschichtung wurde im Vergleichsbeispiel ebenfalls in den Anströmkanälen angeordnet. Im Falle des erfindungsgemäß verwendeten Partikelfilters (Beispiel) wurde die zweite Beschichtungssuspension in den Abströmkanälen angeordnet. Nach dem Aufbringen jeder Beschichtungssuspension wurden die Teile getrocknet und bei 500°C für die Dauer von 4 Stunden kalziniert.

Den so erhaltenen Teilen wurden für die katalytische Charakterisierung jeweils zwei zylindrische Bohrkerne mit einem Durchmesser von 2,54 cm und einer Länge von 17,4 cm entnommen.

Jeweils einer der so erhaltenen Prüflinge wurde zunächst im frisch hergestellten, rußfreien Zustand an einer Modellgasanlage einem "lambda-Sweeptest" nach den üblichen, dem Fachmann geläufigen Prüfverfahren unterzogen.

Anschließend wurden diese Teile bei Raumtemperatur gezielt mit Ruß beladen. Dazu wurde kommerziell erhältlicher Ruß (Hersteller: degussa.) durch Durchleiten von Luft aufgewirbelt und durch das Filter geblasen, bis eine Menge von 5 g/L Ruß, bezogen auf das Volumen des Prüflinge eingebracht waren. Die mit Ruß beladenen Bohrkerne wurden erneut im "lambda-Sweeptest" untersucht.

Der jeweils verbleibende Prüfling wurde vor der Charakterisierung der katalytischen Eigenschaften über die Dauer von 16 Stunden einer Temperatur von 925°C in einer Atmosphäre enthaltend 10 Vol.-% Sauerstoff und 10 Vol.% Wasserdampf in Stickstoff ausgesetzt. Die so gealterten Teile wurden ebenfalls einem "lambda-Sweeptest" unterzogen, nach dem beschriebenen Verfahren mit 5 g/L Ruß beladen und erneut im "lambda-Sweeptest" untersucht.

In allen Fällen wurden im "lambda-Sweeptest" die folgenden Parameter eingestellt:

| **Modellgaszusammensetzung** | |
|---|---|
| CO-Konzentration: | 1,4 Vol.% |
| HC-Konzentration (C₃H₈ : C₃H₆ = 2: 1): | 500 Vppm |
| NOₓ-Konzentration: | 1000 Vppm |
| mittlere O₂-Konzentration: | 0,9 Vol.% |
| lambda-Wert: | 0,98-1,01 |

| **Sonstige Meßparameter** | |
|---|---|
| Temperatur vor Katalysator: | 350°C |
| lambda-Wechselfrequenz: | 1 Hz |
| Amplitude: | 0,5 A/F |
| Raumgeschwindigkeit GHSV: | 25.000 h⁻¹ |

### Vergleichsbeispiel 1:

Nach Auflösen von Bariumhydroxid in Wasser wurde ein Cer/Zirkon-Mischoxid mit einem Ceroxid-Gehalt von 20 Gew.-%, bezogen auf die Gesamtmenge des Cer/Zirkon-Mischoxids, suspendiert und durch Zugabe von Rhodiumnitratlösung unter ständigem Rühren mit Rhodium aktiviert. Danach wurden ein mit 3 Gew.-% Lanthanoxid stabilisiertes Aluminiumoxid (spezifische Oberfläche: 140 g/m²) und ein weiteres Cer/Zirkon-Mischoxid mit einem Ceroxid-Gehalt von 40 Gew.%, bezogen auf das Gesamtgewicht des Cer-Zirkon-Mischoxids, zur Suspension hinzugegeben. Sodann erfolgte die Zugabe von Palladiumnitratlösung unter ständigem Rühren. Die resultierende Beschichtungssuspension wurde direkt zur Beschichtung eines Wandflußfiltersubstrats eingesetzt. Die Suspension wurde nur in den Anströinkanälen des Filterkörpers aufgebracht. Das beschichtete Filter wurden getrocknet und kalziniert. Das fertige katalytisch aktive Partikelfilter enthielt in den Anströmkanälen eine Beschichtung mit der folgenden Zusammensetzung:

| | | |
|---|---|---|
| 14 | g/l | Cer/Zirkon-Mischoxid mit 20 Gew.% Ceroxid |
| 28 | g/l | mit Lanthan stabilisiertes Aluminiumoxid |
| 14 | g/l | Cer/Zirkon-Mischoxid mit 40 Gew.% Ceroxid |
| 2 | g/l | Bariumoxid |
| 1,236 | g/l | Palladium (auf allen Komponenten) |
| 0,176 | g/l | Rhodium (auf Cer/Zirkon-Mischoxid mit 20 Gew.% CeO₂) |

Die Gesamtedelmetallbeladung des so erhaltenen katalytisch aktiven Partikelfilters VGPF1 betrug 1,412 g/l mit einem Verhältnis von Palladium zu Rhodium von 7:1.

### Vergleichsbeispiel 2:

### Anfertigen der ersten Schicht:

Ein mit 3 Gew.% Lanthanoxid stabilisiertes Aluminiumoxid (spezifische Oberfläche 140 m²/g) und ein Cer/Zirkon-Mischoxid mit einem Ceroxidgehalt von 40 Gew.% wurden gemäß US 6,103,660 unter Verwendung von Bariumhydroxid als Base gemeinsam mit Palladium ausgehend von Palladiumnitrat aktiviert. Die resultierende Suspension wurde direkt zur Beschichtung des Wandflußfiltersubstrats eingesetzt. Die Suspension wurde nur in den Anströmkanälen des Filterkörpers aufgebracht. Nach der Beschichtung wurde das Filter getrocknet und kalziniert. Die fertige erste Schicht enthielt die folgenden Beschichtungsmengen:

| | | |
|---|---|---|
| 10 | g/l | mit Lanthan stabilisiertes Aluminiumoxid |
| 10 | g/l | Cer/Zirkon-Mischoxid mit 40 Gew.-% Ceroxid |
| 1 | g/l | Bariumoxid |
| 1,236 | g/l | Palladium (auf allen Komponenten) |

### Anfertigen der zweiten Schicht:

Ein Cer/Zirkon-Mischoxid mit einem Ceroxidgehalt von 20 Gew.% wurde in Wasser suspendiert. Danach wurde der Suspension eine wäßrige Lösung von Rhodiumnitrat unter ständigem Rühren zugeführt und ein mit 3 Gew.% Lanthanoxid stabilisiertes Aluminiumoxid (spezifische Oberfläche: 140 m²/g) hinzugegeben. Das schon mit der ersten Schicht in den Anströmkanälen versehene Wandflußfiltersubstrat wurde mit der zweiten Beschichtungssuspension beschichtet, wobei die zweite Schicht ebenfalls in die Anströmkanäle eingebracht wurde. Das Filter wurde getrocknet und kalziniert. Die fertige zweite Schicht enthielt die folgenden Beschichtungsmengen:

| | | |
|---|---|---|
| 10 | g/l | mit Lanthan stabilisiertes Aluminiumoxid |
| 10 | g/l | Cer/Zirkon-Mischoxid mit 20 Gew.% Ceroxid |
| 0,176 | g/l | Rhodium (auf Cer/Zirkon-Mischoxid mit 20 Gew.% CeO₂) |

Die gesamte Edelmetallbeladung des so hergestellten katalytisch aktiven Partikelfilters VGPF2 betrug 1,412 g/l mit einem Verhältnis von Palladium zu Rhodium von 7:1.

### Beispiel:

### Anfertigen der ersten Schicht:

Ein mit 3 Gew.-% Lanthanoxid stabilisiertes Aluminiumoxid (spezifische Oberfläche 140 m²/g) und ein Cer/Zirkon-Mischoxid mit einem Ceroxidgehalt von 40 Gew.-% wurden gemäß US 6,103,660 unter Verwendung von Bariumhydroxid als Base gemeinsam mit Palladium ausgehend von Palladiumnitrat aktiviert. Die resultierende Suspension wurde direkt zur Beschichtung des Wandflußfiltersubstrats eingesetzt. Die Suspension wurde nur in den Anströmkanälen des Filterkörpers aufgebracht. Nach der Beschichtung wurde das Filter getrocknet und kalziniert. Die fertige erste Schicht enthielt die folgenden Beschichtungsmengen:

| | | |
|---|---|---|
| 14 | g/l | mit Lanthan stabilisiertes Aluminiumoxid |
| 14 | g/l | Cer/Zirkon-Mischoxid mit 40 Gew.% Ceroxid |
| 2 | g/l | Bariumoxid |
| 1,236 | g/l | Palladium (auf allen Komponenten) |

### Anfertigen der zweiten Schicht:

Ein Cer/Zirkon-Mischoxid mit einem Ceroxidgehalt von 20 Gew.-% wurde in Wasser suspendiert. Danach wurde der Suspension eine wäßrige Lösung von Rhodiumnitrat unter ständigem Rühren zugeführt und ein mit 3 Gew.% Lanthanoxid stabilisiertes Aluminiumoxid (spezifische Oberfläche: 140 m²/g) hinzugegeben. Das schon mit der ersten Schicht in den Anströmkanälen versehene Wandflußfiltersubstrat wurde mit der zweiten Beschichtungssuspension beschichtet, wobei die zweite Schicht nur in die Abströmkanäle eingebracht wurde. Das Filter wurde getrocknet und kalziniert. Die fertige zweite Schicht enthielt die folgenden Beschichtungsmengen:

| | | |
|---|---|---|
| 16 | g/l | mit Lanthan stabilisiertes Aluminiumoxid |
| 14 | g/l | Cer/Zirkon-Mischoxid mit 20 Gew.% Ceroxid |
| 0,176 | g/l | Rhodium (auf Cer/Zirkon-Mischoxid mit 20 Gew.% CeO₂) |

Die gesamte Edelmetallbeladung des so hergestellten katalytisch aktiven Partikelfilters GPF1 betrug 1,412 g/l mit einem Verhältnis von Palladium zu Rhodium von 7:1.

### Ergebnisse der katalytischen Charakterisierung im "lambda-Sweeptest":

Wie bereits beschrieben wurden den im Beispiel und in den Vergleichsbeispielen hergestellten katalytisch aktiven Partikelfiltern jeweils zwei zylindrische Bohkerne mit einem Durchmesser von 2,54 cm und einer Länge von 17,4 cm entnommen. Jeweils einer der Prüflinge wurde in frisch hergestelltem Zustand rußfrei und mit Ruß beladen untersucht. Der jeweils verbleibende Bohrkern wurde zunächst bei 925°C für die Dauer, von 16 Stunden in einer Atmosphäre enthaltend 10 Vol.-% Wasserdampf und 10 Vol.-% Sauerstoff synthethisch gealtert und dann in rußfreiem und in mit Ruß beladenem Zustand vermessen.

Die Ergebnisse der "lambda-Sweeptests" sind in den Figuren 5 bis 8 dargestellt.

Figur 5 zeigt die CO-, HC- und NOₓ-Umsätze an den frisch hergestellten katalytisch aktiven Partikelfiltern bei λ = 1. Figur 6 zeigt die entsprechenden Umsatzwerte nach Beladung der katalytisch aktiven Partikelfilter mit je 5 g/L Ruß, bezogen auf das Volumen des Prüflings.

Es ist offenkundig, daß das erfindungsgemäß verwendete katalytisch aktive Partikelfilter GPF1 im frischen Zustand kaum Vorteile gegenüber den nach dem Stand der Technik hergestellten Partikelfiltern VGPF1 und VGPF2 (Doppelschicht) zeigt. Erst in mit Ruß beladenem Zustand zeigt das erfindungsgemäß verwendete Partikelfilter leichte Vorteile im NOₓ-Umsatz und im HC-Umsatz gegenüber den herkömmlichen beschichteten Partikelfiltern.

Die Vorteile des erfindungsgemäße verwendeten Partikelfilters zeigen sich nach thermischer Alterung. Bereits im rußfreien Zustand werden deutlich bessere Schadgasumsätze beobachtet. Nach Beladung mit Ruß sind die Umsätze der drei gängigen Schadgase NOₓ, CO und HC am erfindungsgemäßen Filter GPF1 deutlich höher als an den beschichteten Filtern nach dem Stand der Technik VGPF1 und VGPF2. Insbesondere gegenüber der meist eingesetzten Variante mit einer einheitlichen katalytischen Beschichtung VGPF1 zeigt das erfindungsgemäß verwendete Partikelfilter GPF1 deutliche Vorteile. So ist der NOₓ-Umsatz des erfindungsgemäßen GPF1 mit 95 % um 12 % abs. höher als der des VGPF1. Der HC-Umsatz liegt mit 96 % um 9 % abs. über dem des VGPF1. Der CO-Umsatz von 99 % ist um 7 % abs. höher als der des VGPF1.

Erst die gezeigten Umsatzvorteile des erfindungsgemäß verwendeten katalytisch aktiven Partikelfilters in thermisch gealtertem Zustand schaffen die Vorraussetzungen für einen erfolgreichen Einsatz solcher Bauteile zur Entfernung von Partikeln und den herkömmlichen Schadgasen CO, HC und NOₓ aus dem Abgas von mit überwiegend stöchiometrischem Luft/Kraftstoff-Gemisch betriebenen Verbrennungsmotoren.

## Patentansprüche

1. Verfahren zur Reinigung der Abgase von mit überwiegend stöchiometrischem Luft/Kraftstoff-Gemisch betriebenen Verbrennungsmotoren
**dadurch gekennzeichnet,**
**daß** das Abgas zur Entfernung von Kohlenmonoxid (CO), Kohlenwasserstoffen (HC), Stickoxiden (NOₓ) und Partikeln über ein katalytisch aktives Partikelfilter, enthaltend einen Filterkörper und eine katalytisch aktive Beschichtung, die aus zwei Schichten besteht, wobei beide Schichten ein aktives Aluminiumoxid enthalten und die erste Schicht vom anströmenden Abgas direkt kontaktiert wird, während die zweite Schicht mit dem abströmenden Abgas in direktem Kontakt steht und,
**dadurch gekennzeichnet,**
**daß** das Aluminiumoxid in der ersten Schicht mit Palladium katalytisch aktiviert ist, während die zweite Schicht Rhodium als katalytisch aktive Komponente und zusätzlich ein Sauerstoff speicherndes Cer/Zirkon-Mischoxid enthält, geleitet wird.

2. Verfahren nach Anspruch 1,
**dadurch gekennzeichnet,**
**daß** die erste Schicht kein Sauerstoff speicherndes Cer/Zirkon-Mischoxid enthält.

3. Verfahren nach Anspruch 1 oder 2,
**dadurch gekennzeichnet,**
**daß** das aktive Aluminiumoxid der ersten und zweiten Schicht jeweils mit 1 bis 10 Gew.-% Lanthanoxid, bezogen auf das Geamtgewicht des Aluminiumoxids, stabilisiert ist.

4. Verfahren nach Anspruch 1 oder 2,
**dadurch gekennzeichnet,**
**daß** die Konzentration des Palladiums in der ersten Schicht bezogen auf das Volumen des Partrikelfilters zwischen 0,1 und 10 g/L liegt.

5. Verfahren nach Anspruch 4,
**dadurch gekennzeichnet,**
**daß** das aktive Aluminiumoxid in der ersten Schicht zusätzlich mit Platin katalytisch aktiviert ist und die Konzentration des Platins bezogen auf das Volumen des Partikelfilters 0,01 bis 10 g/L beträgt.

6. Verfahren nach einem der Ansprüche 3 bis 5
**dadurch gekennzeichnet,**
**daß** das aktive Aluminiumoxid in der ersten Schicht zusätzlich mit Strontiumoxid oder Bariumoxid auf der Oberfläche beschichtet ist.

7. Verfahren nach Anspruch 6,
**dadurch gekennzeichnet,**
**daß** die erste Schicht zusätzlich Lanthanoxid oder Neodymoxid enthält.

8. Verfahren nach einem der vorstehenden Ansprüche,
**dadurch gekennzeichnet,**
**daß** die Konzentration des Rhodiums in der zweiten Schicht bezogen auf das Volumen des Partikelfilters zwischen 0,01 und 1 g/L liegt.

9. Verfahren nach Anspruch 8,
**dadurch gekennzeichnet,**
**daß** in der zweiten Schicht das aktive Aluminiumoxid und/oder das Sauerstoff speichernde Cer/Zirkon-Mischoxid zusätzlich mit Platin katalytisch aktiviert ist und die Konzentration des Platins bezogen auf das Volumen des Partikelfilters 0,01 bis 10 g/L beträgt.

10. Verfahren nach Anspruch 8 oder 9,
**dadurch gekennzeichnet,**
**daß** die zweite Schicht zusätzlich Zirkonoxid enthält.

11. Verfahren nach Anspruch 10,
**dadurch gekennzeichnet,**
**daß** das Zirkonoxid mit 1 bis 30 Gew.% Seltenerdmetalloxid, bezogen auf das Gesamtgewicht des Zirkonoxids, stabilisiert ist.

12. Verfahren nach Anspruch 11,
**dadurch gekennzeichnet,**
**daß** das Zirkonoxid nicht mehr als 15 Gew.-% Ceroxid, bezogen auf das Gesamtgewicht des stabilisierten Zirkonoxids enthält.

13. Verfahren nach Anspruch 2,
**dadurch gekennzeichnet,**
**daß** das Cer/Zirkon-Mischoxid in der zweiten Schicht mit 1 bis 15 Gew.-% Metalloxiden, bezogen auf das Gesamtgewicht des Mischoxids, stabilisiert ist, wobei es sich um Oxide der Metalle ausgewählt aus der Gruppe bestehend aus Eisen, Mangan, Titan, Silizium, Zinn, Yttrium, Lanthan, Praseodym, Neodym, Samarium oder Mischungen handelt.

14. Verfahren nach Anspruch 13,
**dadurch gekennzeichnet,**
**daß** das Cer/Zirkon-Mischoxid in der zweiten Schicht ein Gewichtsverhältnis von Ceroxid zu Zirkonoxid von 1 bis 0,1 aufweist.

15. Verfahren nach Anspruch 1,
**dadurch gekennzeichnet,**
**daß** der Filterkörper ausgewählt ist aus der Gruppe der keramischen Wandflußfiltersubstrate, der Sintermetallfilterkörper oder der keramischen oder metallischen Schaumstrukturen.

16. Verfahren nach Anspruch 15,
**dadurch gekennzeichnet,**
**daß** der Filterkörper ausgewählt ist aus der Gruppe der keramischen Wandflußfiltersubstrate und Wände mit einer offenporigen Struktur mit einer Porosität von 40 bis 80 % und einem mittleren Porendurchmesser von 9 bis 30 Micrometern aufweist.

17. Verfahren nach Anspruch 1,
**dadurch gekennzeichnet,**
**daß** der Filterkörper als Tragkörper für die zweite, Rhodium-haltige Schicht dient, wobei sie die gesamte Länge des Bauteils einnimmt,
**und dadurch gekennzeichnet,**
**daß** der mit der zweiten, Rhodium-haltigen Schicht versehene Filterkörper als Tragkörper für die erste, Palladium-haltige Schicht dient.

18. Verfahren nach Anspruch 17
**dadurch gekennzeichnet,**
**daß** die erste, Palladium-haltige Schicht 40 bis 100% der Länge des Bauteils einnimmt und auf der Anströmseite des Bauteils angeordnet ist

19. Verfahren nach Anspruch 16,
**dadurch gekennzeichnet,**
**daß** die erste, vom anströmenden Abgas kontaktierte Schicht über die gesamte Länge des Bauteils in die Poren der Wände des keramischen Wandflußfiltersubstrats eingebracht und homogen in der Wand verteilt ist und die zweite, mit dem abströmenden Abgas in direktem Kontakt stehende Schicht in den Abströmkanälen auf die Wand aufgebracht ist.

20. Verfahren nach Anspruch 19,
**dadurch gekennzeichnet,**
**daß** die zweite, mit dem abströmenden Abgas in direktem Kontakt stehende Schicht 40 bis 100 % der Länge des Bauteils einnimmt und auf der Abströmseite angeordnet ist.

21. Verfahren nach Anspruch 16,
**dadurch gekennzeichnet,**
**daß** die zweite, mit dem abströmenden Abgas in direktem Kontakt stehende Schicht über die gesamte Länge des Bauteils in die Poren der Wände des keramischen Wandflußfiltersubstrats eingebracht und homogen in der Wand verteilt ist und die erste, vom anströmenden Abgas kontaktierte Schicht über die gesamte Länge des Bauteils in den Anströmkanälen auf die Wand aufgebracht ist.

22. Verfahren nach Anspruch 16,
**dadurch gekennzeichnet,**
**daß** die erste, vom anströmenden Abgas kontaktierte Schicht über die gesamte Länge des Bauteils in den Anströmkanälen auf die Wand aufgebracht ist und die zweite, mit dem abströmenden Abgas in direktem Kontakt stehende Schicht in den Abströmkanälen auf die Wand aufgebracht ist.

23. Verfahren nach Anspruch 22,
**dadurch gekennzeichnet,**
**daß** die zweite, mit dem abströmenden Abgas in direktem Kontakt stehende Schicht 40 bis 100 % der Länge des Bauteils einnimmt und auf der Abströmseite angeordnet ist.

24. Verfahren nach einem der Ansprüche 1 bis 23,
**dadurch gekennzeichnet,**
**daß** die Regeneration des Partikelfilters durch das Überleiten eines sauerstoffreichen Abgases bei Abgastemperaturen zwischen 400 und 700 °C erfolgt.

25. Verfahren nach Anspruch 24,
**dadurch gekennzeichnet,**
**daß** die Erzeugung des sauerstoffreichen Abgases im Wege einer Schubabschaltung erfolgt.

26. Verfahren nach Anspruch 24,
**dadurch gekennzeichnet,**
**daß** die Erzeugung des sauerstoffreichen Abgases durch Einblasung von Sekundärluft in den Abgasstrang erfolgt.

## Claims

1. Method for cleaning exhaust gases from combustion engines operated with a predominantly stoichiometric air/fuel mixture,
**characterized in that**
the exhaust gas for removing carbon monoxide (CO), hydrocarbons (HC), nitrogen oxides (NOₓ), and particles is routed over a catalytically active particulate filter, containing a filter body and a catalytically active coating, consisting of two layers, wherein both layers contain an active aluminum oxide and the first layer is contacted directly by the inflowing exhaust gas, while the second layer is in direct contact with the outflowing exhaust gas and,
**characterized in that**
the aluminum oxide in the first layer is catalytically activated with palladium, while the second layer contains rhodium as a catalytically active component and, additionally, an oxygen-storing cerium/zirconium mixed oxide.

2. Method according to claim 1,
**characterized in that**
the first layer contains no oxygen-storing cerium/zirconium mixed oxide.

3. Method according to claim 1 or 2,
**characterized in that**
the active aluminum oxide of the first and second layers is stabilized respectively with 1 to 10 wt% lanthanum oxide, relative to the total weight of the aluminum oxide.

4. Method according to claim 1 or 2,
**characterized in that**
the concentration of the palladium in the first layer is between 0.1 and 10 g/L, relative to the volume of the particulate filter.

5. Method according to claim 4,
**characterized in that**
the active aluminum oxide in the first layer is, in addition, catalytically activated with platinum, and the concentration of the platinum is 0.01 to 10 g/L, relative to the volume of the particulate filter.

6. Method according to one of claims 3 through 5,
**characterized in that**
the active aluminum oxide in the first layer is, in addition, coated with strontium oxide or barium oxide on the surface.

7. Method according to claim 6,
**characterized in that**
the first layer additionally contains lanthanum oxide or neodymium oxide.

8. Method according to one of the previous claims,
**characterized in that**
the concentration of the rhodium in the second layer is between 0.01 and 1 g/L, relative to the volume of the particulate filter.

9. Method according to claim 8,
**characterized in that**
the active aluminum oxide and/or the oxygen-storing cerium/zirconium mixed oxide in the second layer is, in addition, catalytically activated with platinum, and the concentration of the platinum is 0.01 to 10 g/L, relative to the volume of the particulate filter.

10. Method according to claim 8 or 9,
**characterized in that**
the second layer additionally contains zirconium oxide.

11. Method according to claim 10,
**characterized in that**
the zirconium oxide is stabilized with 1 to 30 wt% rare-earth metal oxide, relative to the total weight of zirconium oxide.

12. Method according to claim 11,
**characterized in that**
the zirconium oxide contains no more than 15 wt% cerium oxide, relative to the total weight of the stabilized zirconium oxide.

13. Method according to claim 2,
**characterized in that**
the cerium/zirconium mixed oxide in the second layer is stabilized with 1 to 15 wt% metal oxides, relative to the total weight of the mixed oxide, wherein these are oxides of metals selected from the group consisting of iron, manganese, titanium, silicon, tin, yttrium, lanthanum, praseodymium, neodymium, samarium, or mixtures.

14. Method according to claim 13,
**characterized in that**
the cerium/zirconium mixed oxide in the second layer has a weight ratio of cerium oxide to zirconium oxide of 1 to 0.1.

15. Method according to claim 1,
**characterized in that**
the filter body is selected from the group of ceramic wall-flow filter substrates, sintered metal filter bodies, or ceramic or metallic foam structures.

16. Method according to claim 15,
**characterized in that**
the filter body is selected from the group of ceramic wall-flow filter substrates and has walls of an open-pored structure with a porosity of 40 to 80% and an average pore diameter of 9 to 30 micrometers.

17. Method according to claim 1,
**characterized in that**
the filter body serves as a supporting body for the second, rhodium-bearing, layer, wherein it takes up the entire length of the component,
and **characterized in that**
the filter body provided with the second, rhodium-bearing, layer serves as a supporting body for the first, palladium-bearing, layer.

18. Method according to claim 17,
**characterized in that**
the first, palladium-bearing, layer takes up 40 to 100% of the length of the component and is arranged on the in-flow side of the component.

19. Method according to claim 16,
**characterized in that**
the first layer, contacted by the inflowing exhaust gas, is introduced over the entire length of the component in the pores of the walls of the ceramic wall-flow filter substrate and distributed homogeneously in the wall, and the second layer, which is in direct contact with the outflowing exhaust gas, is applied in the outflow channels on the wall.

20. Method according to claim 19,
**characterized in that**
the second layer, which is in direct contact with the outflowing exhaust gas, takes up 40 to 100% of the length of the component and is arranged on the outflow side.

21. Method according to claim 16,
**characterized in that**
the second layer, which is in direct contact with the outflowing exhaust gas, is introduced over the entire length of the component in the pores of the walls of the ceramic wall-flow filter substrate and is distributed homogeneously in the wall, and the first layer, contacted by the inflowing exhaust gas, is applied over the entire length of the component in the outflow channels on the wall.

22. Method according to claim 16,
**characterized in that**
the first layer, contacted by the inflowing exhaust gas, is applied over the entire length of the component in the inflow channels on the wall, and the second layer, which is in direct contact with the outflowing exhaust gas, is applied in the outflow channels on the wall.

23. Method according to claim 22,
**characterized in that**
the second layer, which is in direct contact with the outflowing exhaust gas, takes up 40 to 100% of the length of the component and is arranged on the outflow side.

24. Method according to one of claims 1 through 23,
**characterized in that**
the particulate filter is regenerated by passing an oxygen-rich exhaust gas over it at exhaust gas temperatures between 400 and 700 °C.

25. Method according to claim 24,
**characterized in that**
the oxygen-rich exhaust gas is produced by way of a fuel cut-off.

26. Method according to claim 24,
**characterized in that**
the oxygen-rich exhaust gas is produced by injecting secondary air into the exhaust gas system.

## Revendications

1. Procédé pour la purification des gaz d'échappement de moteurs à combustion exploités avec un mélange air/carburant principalement stoechiométrique
**caractérisé en ce que**
le gaz d'échappement, en vue d'éliminer le monoxyde de carbone (CO), les hydrocarbures (HC), les oxydes d'azote (NOₓ) et les particules, sur un filtre à particules catalytiquement actif, contenant un corps de filtre et un revêtement catalytiquement actif, qui est constitué par deux couches, les deux couches contenant un oxyde d'aluminium actif et la première couche étant mise en contact direct avec le gaz d'échappement entrant, alors que la deuxième couche est en contact direct avec le gaz d'échappement sortant et
**caractérisé en ce que**
l'oxyde d'aluminium dans la première couche est activé catalytiquement à l'aide de palladium alors que la deuxième couche contient du rhodium comme composant catalytiquement actif et en outre un oxyde mixte de cérium/zirconium stockant de l'oxygène.

2. Procédé selon la revendication 1,
**caractérisé en ce que**
la première couche ne contient pas d'oxyde mixte de cérium/zirconium stockant de l'oxygène.

3. Procédé selon la revendication 1 ou 2,
**caractérisé en ce que**
l'oxyde d'aluminium actif de la première et de la deuxième couche est à chaque fois stabilisé par 1 à 10 % en poids d'oxyde de lanthane, en fonction du poids total de l'oxyde d'aluminium.

4. Procédé selon la revendication 1 ou 2,
**caractérisé en ce que**
la concentration en palladium dans la première couche, en fonction du volume du filtre à particules, est située entre 0,1 et 10 g/l.

5. Procédé selon la revendication 4,
**caractérisé en ce que**
l'oxyde d'aluminium actif dans la première couche est en outre activé catalytiquement par du platine et la concentration en platine, en fonction du volume du filtre à particules, est de 0,01 à 10 g/l.

6. Procédé selon l'une quelconque des revendications 3 à 5,
**caractérisé en ce que**
l'oxyde d'aluminium actif dans la première couche est en outre revêtu d'oxyde de strontium ou d'oxyde de baryum sur la surface.

7. Procédé selon la revendication 6,
**caractérisé en ce que**
la première couche contient en outre de l'oxyde de lanthane ou de l'oxyde de néodyme.

8. Procédé selon l'une quelconque des revendications précédentes,
**caractérisé en ce que**
la concentration en rhodium dans la deuxième couche, en fonction du volume du filtre à particules, est située entre 0,01 et 1 g/l.

9. Procédé selon la revendication 8,
**caractérisé en ce que**
dans la deuxième couche, l'oxyde d'aluminium actif et/ou l'oxyde mixte de cérium/zirconium stockant de l'oxygène est/sont en outre activé(s) catalytiquement par du platine et la concentration en platine, en fonction du volume du filtre à particules, est de 0,01 à 10 g/l.

10. Procédé selon la revendication 8 ou 9,
**caractérisé en ce que**
la deuxième couche contient en outre de l'oxyde de zirconium.

11. Procédé selon la revendication 10,
**caractérisé en ce que**
l'oxyde de zirconium est stabilisé par 1 à 30 % en poids d'oxyde métallique de terres rares, en fonction du poids total de l'oxyde de zirconium.

12. Procédé selon la revendication 11,
**caractérisé en ce que**
l'oxyde de zirconium ne contient pas plus de 15 % en poids d'oxyde de cérium, en fonction du poids total de l'oxyde de zirconium stabilisé.

13. Procédé selon la revendication 2,
**caractérisé en ce que**
l'oxyde mixte de cérium/zirconium dans la deuxième couche est stabilisé par 1 à 15 % en poids d'oxydes métalliques, en fonction du poids total de l'oxyde mixte, où il s'agit d'oxydes des métaux choisis dans le groupe constitué par le fer, le manganèse, le titane, le silicium, l'étain, l'yttrium, le lanthane, le praséodyme, le néodyme, le samarium ou des mélanges.

14. Procédé selon la revendication 13,
**caractérisé en ce que**
l'oxyde mixte de cérium/zirconium dans la deuxième couche présente un rapport pondéral d'oxyde de cérium à oxyde de zirconium de 1 à 0,1.

15. Procédé selon la revendication 1,
**caractérisé en ce que**
le corps de filtre est choisi dans le groupe formé par les substrats céramiques de filtre à écoulement à travers les parois, les corps de filtre en métal fritté ou les structures céramiques ou métalliques en mousse.

16. Procédé selon la revendication 15,
**caractérisé en ce que**
le corps de filtre est choisi dans le groupe des substrats céramiques de filtre à écoulement à travers les parois et présente des parois pourvues d'une structure à pores ouverts, présentant une porosité de 40 à 80 % et un diamètre moyen de pore de 9 à 30 micromètres.

17. Procédé selon la revendication 1,
**caractérisé en ce que**
le corps de filtre sert de corps support pour la deuxième couche contenant du rhodium, dans lequel elle occupe toute la longueur de la pièce
et **caractérisé en ce que**
le corps de filtre pourvu de la deuxième couche, contenant du rhodium, sert de corps support à la première couche, contenant du palladium.

18. Procédé selon la revendication 17,
**caractérisé en ce que**
la première couche, contenant du palladium, occupe 40 à 100 % de la longueur de la pièce et est disposée sur le côté entrant de la pièce.

19. Procédé selon la revendication 16,
**caractérisé en ce que**
la première couche, entrant en contact avec le gaz d'échappement entrant, est introduite sur toute la longueur de la pièce dans les pores des parois du substrat céramique du filtre à écoulement à travers les parois et est répartie de manière homogène dans la paroi et la deuxième couche, en contact direct avec le gaz d'échappement sortant, est appliquée dans les canaux de sortie sur la paroi.

20. Procédé selon la revendication 19,
**caractérisé en ce que**
la deuxième couche, en contact direct avec le gaz d'échappement sortant, occupe 40 à 100 % de la longueur de la pièce et est disposée sur le côté sortie.

21. Procédé selon la revendication 16,
**caractérisé en ce que**
la deuxième couche, en contact direct avec le gaz d'échappement sortant, est introduite sur toute la longueur de la pièce dans les pores des parois du substrat céramique du filtre à écoulement à travers les parois et est répartie de manière homogène dans la paroi et la première couche, entrant en contact avec le gaz d'échappement entrant, est appliquée sur toute la longueur de la pièce dans les canaux entrants sur la paroi.

22. Procédé selon la revendication 16,
**caractérisé en ce que**
la première couche, entrant en contact avec le gaz d'échappement entrant, est appliquée sur toute la longueur de la pièce dans les canaux entrants sur la paroi et la deuxième couche en contact direct avec le gaz d'échappement sortant est appliquée dans les canaux de sortie sur la paroi.

23. Procédé selon la revendication 22,
**caractérisé en ce que**
la deuxième couche, en contact direct avec le gaz d'échappement sortant, occupe 40 à 100 % de la longueur de la pièce et est disposée sur le côté sortie.

24. Procédé selon l'une quelconque des revendications 1 à 23,
**caractérisé en ce que**
la régénération du filtre à particules est effectuée par le fait de faire passer, sur celui-ci, un gaz d'échappement riche en oxygène à des températures de gaz d'échappement entre 400 et 700 °C.

25. Procédé selon la revendication 24,
**caractérisé en ce que**
la production du gaz d'échappement riche en oxygène est effectuée au cours d'une coupure en décélération.

26. Procédé selon la revendication 24,
**caractérisé en ce que**
la production du gaz d'échappement riche en oxygène est effectuée par insufflation d'air secondaire dans la ligne de gaz d'échappement.
